# EUROPEAN PATENT APPLICATION

(11) **EP 3 460 739 A1**
(43) Date of publication of application: **27.03.2019**
(21) Application number: 17425092.8
(22) Date of filing: 25.09.2017
(51) Int. Cl.: G06Q 40/02, G06Q 20/38

(54) **METHOD FOR IMPLEMENTING THE IBAN PORTABILITY**

(71) Applicant: Iban Portability Project S.r.l., 21100 Varese (VA) (IT)
(72) Inventor: Russo, Enzo, 21100 Varese VA (IT)
(74) Representative: Perani & Partners S.p.A.

(57) **Abstract**

A method of providing portability of an IBAN code, comprising the steps of: providing a network server (1) associated with a common bank platform and connected to the Internet; providing a default application (2) residing in the network server (1); accessing the default application (2) for generating a first user profile associated with a first bank (4); providing a first BIC code associated with the first user profile and a first private IBAN code associated with the first BIC code; providing a portability code associated with the first private IBAN code and a public IBAN code associated with the first private IBAN code and the portability code; accessing the default application to generate a second user profile associated with a second bank (5); providing a second BIC code associated with the second user profile and a second private IBAN code associated with the second BIC code; providing the portability code to the second user profile; accessing the default application (2) using the second user profile and entering the portability code, the second private IBAN code and the public IBAN code to associate the second private IBAN code with the public IBAN code related to the portability code and to dissociate the public IBAN code from the first private IBAN code.

## Description

### FIELD OF THE INVENTION

The present disclosure relates to a method of providing IBAN portability from one bank to another as defined in the preamble of claim 1.

### Discussion of the related art

In the prior art, execution of a wire transfer requires precise knowledge of the bank details of a recipient. Namely, a wire transfer can be only executed if the International Bank Account Number, also known as IBAN, is known, and standardized identification of the recipient's bank account is provided, as required for SEPA (Single Euro Payments Area) payments. Furthermore, execution of a wire transfer requires knowledge of the BIC/SWIFT code, which allows identification of the recipient's financial institution, and is used for foreign payments and for SEPA payments.

The IBAN code is an alphanumeric code consisting of: two letters representing the Country (e.g. IT for Italy); two check digits; and a domestic BBAN code of the account. The BBAN code (i.e. Basic Bank Account Number) is a code composed of at least 23 characters which identifies the domestic bank account number. Therefore, the IBAN code was internationally defined for each European country by its respective central bank with the constraint of containing a series of characters that can identify the relevant bank.

In Italy, the BBAN is twenty-three characters long and is composed of: CIN (one character), ABI (five digits), CAB (five digits), Account number (twelve digits, possibly containing zeros from the left to complement a number of less than twelve digits).

Payments are made by SEPA Credit Transfer (also known as SCT), which was introduced by the European Payments Council at the beginning of 2008, and sets a series of rules for funds transfer between banks in the EU, and involves the payer's bank, the Clearing and Settlement Mechanism for wire transfers and the recipient's bank.

### Problem of the prior art

SEPA credit transfer was not designed to allow IBAN portability from one bank to another. Furthermore, since the IBAN is an account identification code, it cannot be associated with a different account without being modified.

Thus, in the prior art, if a user wants to switch banks, he/se must obtain a new IBAN code associated to his/her new current account. Therefore, he/she will have to notify the change to all his/her creditors and give then the new bank details for them to make wire transfers to his/her new current account each time he/she decides to switch banks. This will discourage users from switching banks and look for more competitive financial products and services that meet their particular needs.

### SUMMARY OF THE INVENTION

Therefore, the object of the present invention is to provide a method that allows IBAN transferability when a user switches banks, without changing the code.

### Advantages of the invention

In one embodiment, a method may be provided that affords IBAN portability from one bank to another without changing the code, by implementing a masking process.

In one embodiment, a method may provided that affords IBAN portability from one bank to another and that, once bank and IBAN details have been received, generates an associated mask, which is public and that even downstream from the transfer to another bank, remains fixed, ensuring safety of the transaction.

In one embodiment, a method can provide IBAN portability across a common platform that, using data shared by the banks, can track the dates of generation and switching of each IBAN, in view of facilitating transparency and enhancing competition between banks in the services they offer to consumers.

### BRIEF DESCRIPTION OF THE DRA WINGS

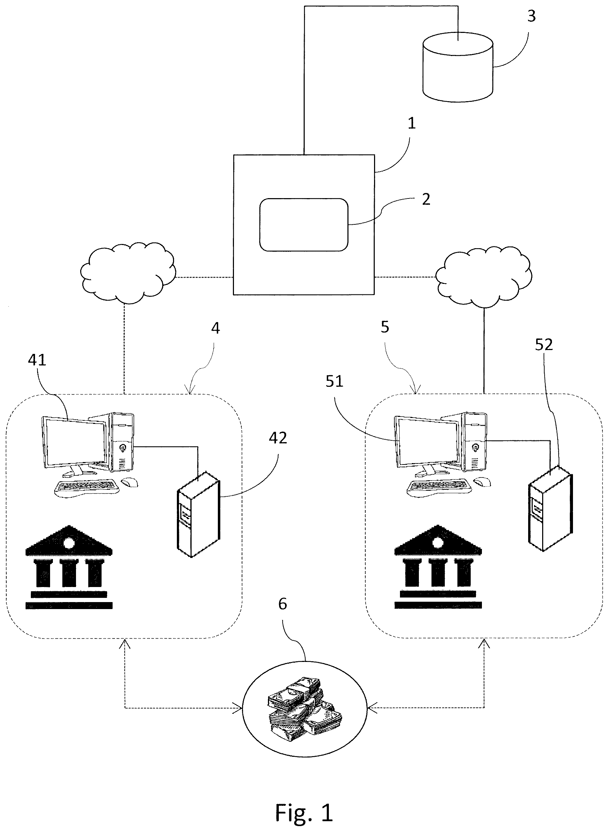

The characteristics and advantages of the present invention will appear from the following detailed description of a possible practical embodiment, which is illustrated without limitation in the set of drawings, in which Figure 1 shows a possible implementation of a method of providing IBAN portability according to the present invention.

### DETAILED DESCRIPTION

Even when this is not expressly stated, the individual features as described with reference to the particular embodiments shall be intended as auxiliary to and/or interchangeable with other features described with reference to other exemplary embodiments.

Referring to Figure 1, the present invention relates to a method of providing portability of the IBAN associated with a bank account.

The method of providing portability of an IBAN code comprises the step of providing a network server 1 associated with a common bank platform. The network server is connected to the Internet by a wired network and/or via the cloud.

The method comprises the step of providing a default application 2 residing in the network server 1 i.e. a computer designed to be connected to a computer network via an Internet/Intranet connection. Preferably, the default application 2 comprises a set of functions that are configured to carry out special tasks, such as allowing the creation of user profiles by entering and storing user data.

The method comprises a step of providing a database 3 in signal communication with the network server 1, i.e a database that is designed to be stored or connected to the network server 1. Preferably, the database 3 comprises a repository architecture for data management.

The method comprises a step of accessing the default application 2 to generate a first user profile associated with a first bank 4.

Preferably, the step of generating the first user profile comprises the substep of entering data of the first bank 4.

Also preferably, the first bank 4 comprises at least one first processing unit 41, such as a computer, connected to a first server 42 for handling the data of the customers of the first bank 4 and for providing signal communication with the network server 1.

In other words, the method includes a step of registration by the financial institution, i.e. of the first bank 4, with the network server 1 of the common bank platform, through which details of the first participating bank 4, such as email, address and telephone number, may be entered.

The method comprises a step of providing a first BIC code associated with the first user profile.

The method comprises a step of accessing the default application 2 from the first user profile to provide a first IBAN code, to thereby associate the first private IBAN code with the first BIC code.

The method comprises a step of providing a portability code associated with the first private IBAN code. According to a preferred arrangement, the method comprises the step of generating the portability code using a hash function executed by the default application 2.

The method comprises a step of providing a public IBAN code associated with the first private IBAN code and the portability code. According to a preferred arrangement, the method comprises the step of generating the public IBAN code using a hash function executed by the default application 2.

The method comprises a step of storing the first BIC code, the first private IBAN code, the portability code and the public IBAN code into the database 3.

The method comprises a step of accessing the default application to generate a second user profile associated with a second bank 5. Preferably, the step of generating the second user profile comprises the substep of entering data of the second bank 5. Also preferably, the second bank 5 comprises at least one second processing unit 51, such as a computer, connected to a second server 52 for handling the data of the customers of the second bank 5 and for providing signal communication with the network server 1. In other words, the method includes a step of registration by the financial institution, i.e. of the second bank 5, with the network server 1 of the common bank platform, through which details of second participating bank 5, such as email, address and telephone number, may be entered.

The method comprises a step of providing a second BIC code associated with the second user profile.

The method comprises a step of accessing the default application 2 from the second user profile to provide a second IBAN code, to thereby associate the second private IBAN code with the second BIC code.

The method comprises a step of storing a second BIC code and the second private IBAN code into the database 3.

The method comprises a step of providing the portability code to the second user profile. Preferably, this step is carried out by the first user profile through the default application 2, possibly by also providing the public IBAN code to the second user profile. Nevertheless, it shall be noted that, since the public IBAN code is available to everyone, due to its public nature, the user that requires IBAN portability shall simply notify it to the second bank.

The method comprises a step of accessing the default application 2 using the second user profile, to enter the second private IBAN code, the portability code and the public IBAN code into a special data acquisition string provided by the default application 2, to thereby associate the second private IBAN code to the public IBAN code related to the portability code, and to dissociate the first private IBAN code from the public IBAN code.

It shall be noted that the method may be carried out iteratively for each first private IBAN code associated with the customers of the first bank and the second bank 5. Indeed, each bank has at least one customer, holding at least one bank account associated with a respective private IBAN code. The portability according to the present method may be provided for each first private IBAN code stored in the database 3, by maintaining the associated public IBAN code to be used for payments.

According to a preferred arrangement, the method comprises the step of disabling the portability code once portability of the public IBAN code has been provided, and to generate a new portability code to be associated with the second private IBAN code and the public IBAN code. In other words, in an iterative IBAN transfer process, the (fixed and virtual) public IBAN is generated only once and transferred when a user moves from one bank to another, while, whenever IBAN portability is effected and the new bank generates a new (variable and real) private IBAN code, a new portability code is generated, which will be associated with the new private IBAN code. Preferably, the method comprises the step of storing or updating the new portability code in the database 3.

It shall be understood that, even if the second bank 5 must necessarily generate a second private IBAN code when a customer switches banks, the common bank platform stores the second private IBAN code and associates it with the public IBAN code that is already associated with the user, and also updates the second BIC code. This will afford portability to the user, who will still use his/her old IBAN (i.e. the public IBAN code) because the common bank platform has created a relation between the public IBAN code and the new bank details of the second bank 5, i.e. the second BIC code and the second IBAN private code, which will be used by the known financial systems to make payments. Therefore the user may use the (virtual) public IBAN code, which actually has no semantic meaning, to make payments instead of the (real) private IBAN code. Using the common platform and the associated default application, the method of the present invention can readdress the payment to the he private IBAN code and BIC code associated with the public IBAN code. With this method, user data can be advantageously protected, because the user can use a dummy public code, also known as mask code, without disclosing to third parties his/her current real bank details.

According to a preferred arrangement, the method comprises the step of providing a first API (Application Programming Interface) key associated with the first user profile and a second API key associated with the second user profile to access the default application 2, and be able to make payments. The API keys can be invoked by the financial institutions and allow the following steps to be carried out: i) entering the private IBAN into the repository of the common bank platform, by providing the date of generation thereof, and the related BIC; once such data have been entered, the default application 2 of the common bank platform can generate a portability code (i.e. A secret code that the first requesting bank shall keep) and a mask , referred to herein as a public IBAN code, which will be forwarded to the first bank to be used as a public IBAN by the customer to make payments; therefore, the customer of the first bank will not need knowledge of the first private IBAN code generated by the first bank; ii) checking the date of generation of the first IBAN code, and the date of BIC switching for financial control institutions; (iii) checking the BIC, given the IBAN, for facilitating banks to check correct payment data; (iv) updating the (variable) private BIC code associated with the (fixed) public IBAN code, which will be obtained by the new (second) bank 5 by entering at least the portability code that the old (first) bank shall have notified to it, which is a key required to ensure proper execution portability of the public IBAN code; which means that, for the BIC and private IBAN associated with the public IBAN code to be updated, the new bank shall have to enter the portability code that the previous bank shall have notified to it, and wait as many days as predetermined by the platform, during which time the previous bank will be notified of the update and after which time changes will be effective, unless the contrary is notified by the previous bank.

According to a preferred arrangement, the method comprises the step of storing the date of generation of the first private IBAN code associated with the first BIC code and/or the user's switching date associated with the second BIC code or the second private IBAN code and/or the date of generation of the public IBAN code into the database 3.

According to a preferred arrangement, the method comprises the step of providing the data stored in the database 3 to confirm that payments have been made correctly.

According to a preferred arrangement, the method comprises the step of generating histories by having stored the private IBAN codes and the corresponding BIC codes, related to the public IBAN code, into the database 3.

According to a preferred arrangement, the method comprises the step of notifying the first user profile of the portability of the public IBAN code to the second user profile via the default application 2. In other words, the method includes a notification process, whereby the common bank platform will notify the previous (first) bank holding the first private IBAN code of the portability of the IBAN code to the second bank, holding the second private IBAN code, preferably with a wait time that is equal to a number of business days as decided by the platform, whereupon the update will be effective.

According to a preferred arrangement, the method comprises the step of updating the data of the second private IBAN code in the database 3, such that the public IBAN code will be associated with at least the second BIC code, the portability code and the second private IBAN code when providing portability of the public IBAN code from the first user profile to the second user profile.

According to a preferred arrangement, the method comprises the step of providing a common payment platform 6, which is configured to enable payments to the first bank 4 and the second bank 5. For example, the common payment platform 6 is the regulatory platform that allows for SEPA credit transfers.

Advantageously, a first bank 4 is capable of providing portability of the (virtual) public IBAN code related to the first (real) private IBAN code using the features provided by the default application 2 residing in the network server 1 of the common bank platform, by carrying out the method of the present invention, without neglecting SEPA rules.
A few brief exampled of the inventive method will be set forth below.

### EXAMPLE 1:

The first bank 4 decides to register with the network server 1 of the common bank platform by accessing the default application 2, to provide an IBAN portability service to its customers. First, the first bank 4 connects on-line to the common bank platform and registers therewith using the default application 2, by entering its own geographic data, telephone number and email address. Once the registration data have been confirmed, it will be stored into the repository of the common bank platform, and the first bank 4 will receive a notification message in its email boxy, with a link for activation of its own (first) profile on-line. Upon activation, the first bank 4 may download the API keys and use the libraries that, for each first private IBAN code in its database, will first allow it to carry out the OnBoarding step, by registering the following data into the repository of the platform: first private IBAN code, date of generation of the first private IBAN code and the first BIC code, and receiving a portability code and a public IBAN code for each first IBAN code registered. Once the OnBoarding step has been completed, the first bank 4 may make payments as follows: once the first bank 4 has received a request for wire transfer completion by one of its customers, it shall first use the API keys to check the BIC code corresponding to the IBAN that has been entered by the customer, because such IBAN might have been transferred from one bank to the other, and have lost its semantic meaning as a container of the ABI and CAB codes, that might not be those of the recipient's bank. By this check, the first bank 4 will make sure that the payment is routed to the proper recipient bank, once it has checked the BIC code and the private IBAN code corresponding to the public IBAN code that has been invoked through invocation of the API keys, and may thus follow the SEPA procedure.

### EXAMPLE 2:

At a given date, the first bank 4 receives an account opening request by a new customer that has no IBAN code with other banks yet. Thus, once the first bank 4 has generated the first private IBAN code, it may register by the default application 2 to invoke the API keys and enter the registration data (OnBoarding step), to thereby receive the portability code related to the first private IBAN code and the first BIC code of the first bank 4. The default application generates a secret portability code and a public IBAN code associated with the first private IBAN code, and provides them to the first bank 4. The (virtual) public IBAN code is intended to be used for business transactions, while the first private IBAN code (which is real and related to the current account of the customer) is intended to remain secret and protected. The first bank 4 will in turn provide the public IBAN code to its customer for the latter to safely use it to receive payments.

At a later date, the customer of the first bank 4 decides to effect portability of the (virtual) public IBAN code to the second bank 5, which has already registered with the common bank platform via the preset application 2 and has already carried out the OnBoarding step. The first bank 4 shall privately notify the portability code of the first private IBAN code, the second private IBAN code and the public IBAN code to the second bank 5. Once the second bank 5 has received the portability code, it may invoke the API keys to enter the following data into the data forms provided by the default application 2: portability code, second private IBAN code, public IBAN code, IBAN switching date (and second BIC code). This will update the private IBAN code associated with the public IBAN code. Once the correctness of the portability code has been confirmed, the platform will provide a new (secret) portability code associated with the second private IBAN code to the second bank 5 and will notify the first bank 4 of the request for updating the data associated with the public IBAN code (i.e., the portability of public IBAN code) and, upon expiry of the business days that have been required for notice, the update will become effective, unless otherwise decided by the first bank 4. At the end of the notification period, a trace of the old (first) BIC code and the old (first) private IBAN code will remain in the repository of the common bank platform, but the new (second) BIC code and the new (second) private IBAN code will be stored therein, with the public IBAN code still being used for routing payments. Assuming now that the International Financial Institution might want to check the payments of a given customer, upon registration with the platform, it will simply invoke the API keys and enter the IBAN of the customer to display all the BIC codes with their respective generation and switching dates, and the first related IBAN code.

Advantageously, the method of the present invention affords portability of the real IBAN by masking it with a virtual, public IBAN code, to be used for payments instead of the real IBAN code. This is because the method provides a service for updating the private IBAN and BIC, given a secret portability code and an existing public IBAN code.

Advantageously, the method of the present invention provides IBAN portability from one bank to another without requiring the code to be changed. After a step in which the bank registers with the common bank platform, the method comprises an OnBoarding process through which the bank forwards the private IBAN codes, the code generation dates and the reference BICs in a single file, to be entered into the common bank platform which associates a portability code and a public IBAN with each private IBAN. The method includes a transition step, whereby the new bank, which has taken over the public IBAN of the previous bank, must forward the private IBAN associated with the new current account (second IBAN code), the portability code, the public IBAN code, the take-over date and its own BIC (second BIC code) in a file, to facilitate updating of the common platform, which will track all the transitions and will check that switching of the private IBAN and the BIC is valid, by notifying the previous bank and waiting a predetermined number of days before changes are effective. The common platform provides APIs to carry out several tasks, such as; providing the portability code and the public IBAN code, given the private IBAN code; providing a BIC check, given the IBAN code; allowing portability of the public IBAN, given the portability code, the new private IBAN and the switching date; providing the dates of generation and switching (if any), given the public IBAN code.

## Claims

1. A method of providing portability of an IBAN code, comprising the steps of:
- providing a server (1) connected to a computer network and associated with a common bank platform via an Internet/Intranet connection;
- providing a default application (2) residing in said server (1);
- providing a database (3) in signal communication with said server (1);
- accessing said default application (2) to generate a first user profile associated with a first bank (4);
- providing a first BIC code associated with said first user profile;
- accessing said default application (2) from said first user profile to provide a first private IBAN code, to thereby associate said first private IBAN code with said first BIC code;
said method being **characterized in that** it comprises the steps of:
- providing a portability code associated with said first private IBAN code;
- providing a public IBAN code associated with said first private IBAN code and said portability code;
- storing said first BIC code, said first private IBAN code, said portability code and said public IBAN code into said database (3);
- accessing said default application to generate a second user profile associated with a second bank (5);
- providing a second BIC code associated with said second user profile;
- accessing said default application (2) from said second user profile to provide a second private IBAN code, to thereby associate said second private IBAN code with said second BIC code;
- storing said second BIC code and said second private IBAN code into said database (3);
- providing said portability code to said second user profile;
- accessing said default application (2) from said second user profile to enter said second private IBAN code and said portability code and said public IBAN code, to thereby associate said second private IBAN code with the public IBAN related to said portability code and to dissociate said first private IBAN code from said public IBAN code.

2. A method as claimed in claim 1, comprising the step of disabling said portability code and generating a new portability code to be associated with said second private IBAN code and with said public IBAN code.

3. A method as claimed in claim 2, comprising the step of storing said new portability code into said database (3).

4. A method as claimed in any of the preceding claims, comprising the step of providing a first API key associated with said first user profile and a second API key associated with said second user profile to access said default application (2) and be able to make payments.

5. A method as claimed in any of the preceding claims, comprising the step of storing the date of generation of said first private IBAN code and/or the user's switching date associated with the second private IBAN code.

6. A method as claimed in any of the preceding claims, comprising the step of providing the data stored in the database (3) to confirm that payments have been made correctly.

7. A method as claimed in any of the preceding claims, comprising the step of generating said portability code and/or said public IBAN code using a hash function executed by said default application (2).

8. A method as claimed in any of the preceding claims, comprising the step of notifying said first user profile of the portability of said public IBAN code to said second user profile via said default application (2).

9. A method as claimed in any of claims 2 to 8, comprising the step of updating the data of said second private IBAN code in the database (3), such that said public IBAN code will be associated with at least said second BIC code, said portability code and said second private IBAN code when providing portability of said public IBAN code from said first user profile to said second user profile.

10. A method as claimed in any of the preceding claims, comprising the step of providing a common payment platform (6), which is configured to enable payments to said first bank (4) and said second bank (5).
